# EUROPEAN PATENT APPLICATION

(11) **EP 4 545 223 A1**
(43) Date of publication of application: **30.04.2025**
(21) Application number: 24209161.9
(22) Date of filing: 28.10.2024
(51) Int. Cl.: B22F 10/50, B33Y 40/00, B33Y 10/00, B33Y 30/00, B33Y 40/20, B22F 12/30, B22F 10/66, B22F 10/28, B29C 64/245, B22F 5/00, B29C 64/35, B29C 64/153

(54) **IN-PROCESS SURFACE FINISHING FOR UNITIZED ADDITIVE STRUCTURES**

(30) Priority: 27.10.2023 US 202318496630
(71) Applicant: RTX Corporation, Farmington, CT 06032 (US)
(72) Inventor: BINEK, Lawrence A., East Hartford, 06118 (US); BOYER, Jesse R., East Hartford, 06118 (US); MA, Shirley S., East Hartford, 06118 (US)
(74) Representative: Dehns

(57) **Abstract**

An abrasive flow machining (AFM) system includes a first abrasive media reservoir (58a), means for connecting the first abrasive media reservoir (58a) to an additive manufacturing (AM) system build plate (44), and means for directing abrasive media (56) from the first abrasive media reservoir (58a) through the plurality of abrasive media flow channels (52) in the AM system build plate (44) into a plurality of flow channels in the structure. The AM system build plate (44) includes a unitized additive structure (42) built on the AM system build plate (44) during an AM system build campaign and a plurality of abrasive media flow channels (52) extending entirely through a thickness of the AM system build plate (44) to facilitate an in-process surface finishing operation.

## Description

The present disclosure relates generally to additive manufacturing and, more particularly, to post processing of unitized structures made with additive manufacturing techniques.

Additive manufacturing (AM) techniques, including powder bed fusion (PBF) additive manufacturing, can be used to make near net shape parts. As is well known, AM processes can result in parts having an undesirable surface roughness. Such parts often require post processing such as deburring, surface finishing, polishing, and/or radius shaping to finish rough surfaces, particularly rough surfaces on internal passages.

### SUMMARY

One aspect of this disclosure is directed to a build plate for a powder bed fusion (PBF) additive manufacturing (AM) system. The build plate is configured to support a structure built on the build plate during a PBF build campaign and includes a plurality abrasive media flow channels extending entirely through a thickness of the build plate. The plurality of abrasive media flow channels are configured and sized to be open during an abrasive flow machining (AFM) operation to permit a flow of abrasive media from a source of abrasive media through the abrasive media flow channels in the build plate into the structure built on the build plate.

Another aspect of this disclosure is directed to an abrasive flow machining (AFM) system that includes a first abrasive media reservoir, means for connecting the first abrasive media reservoir to an additive manufacturing (AM) system build plate, and means for directing abrasive media from the first abrasive media reservoir through the plurality of abrasive media flow channels in the AM system build plate into a plurality of flow channels in the structure. The AM system build plate includes a structure built on the AM system build plate during an AM system build campaign and a plurality of abrasive media flow channels extending entirely through a thickness of the AM system build plate.

Yet another aspect of this disclosure is directed to a method of making a structure with a powder bed fusion (PBF) additive manufacturing (AM) system. A build plate configured to support a structure built on the build plate during a PBF build campaign is installed in the AM system. The build plate includes a plurality abrasive media flow channels extending entirely through a thickness of the build plate. In some examples, the plurality of abrasive media flow channels can be configured to be sealed during the PBF build campaign to prevent build powder from entering the plurality of abrasive media flow channels and are configured and sized to be open during an abrasive flow machining (AFM) operation to permit a flow of abrasive media from a source of abrasive media to the structure positioned on the build plate. A powder delivery mechanism delivers build powder to a build area to form a build powder bed and a recoater distributes the build powder in the build powder bed to provide even distribution of the build powder in the build powder bed. An optical array positioned over the build area on the build plate directs energy to the build powder in the build powder bed to form a melt pool in the build powder bed. The build powder from the melt pool is selectively sintered using energy from the optical array to form a layer of the structure on the build plate. The build plate is lowered with a build piston at a predetermined rate as the structure is formed on the build plate during the PBF campaign. The PBF build campaign is paused at a predetermined point that corresponds to completion of desired elements of the structure and unconsolidated build powder is evacuated from the AM system. The build plate is elevated with the build piston to permit the build plate and the structure built on the build plate to be removed from the AM system. The build plate and the structure built on the build plate is removed from the AM system and the abrasive media flow channels in the build plate are opened. The build plate and the structure built on the build plate are positioned in an abrasive flow system. Abrasive material from a first abrasive media reservoir on the abrasive flow system is flowed through the abrasive media flow channels in the build plate and through a plurality of flow channels in the structure to achieve a desired surface finish on the plurality of flow channels in the structure. The build plate and the structure built on the build plate are removed from the abrasive flow system and the abrasive media flow channels in the build plate are closed. The build plate and the structure built on the build plate are positioned in the AM system and the build plate and the structure built on the build plate are lowered to a predetermined height that corresponds to the height at which the PBF campaign was paused. The PBF campaign is restarted by delivering, with the powder delivery mechanism, build powder to the build area over the build plate and surrounding the structure built on the build plate to re-form the build powder bed. A recoater distributes the build powder in the build powder bed to provide even distribution of the build powder in the build powder bed. The optical array positioned over the build area on the build plate directs energy to the build powder in the build powder bed to re-form the melt pool in the build powder bed. The build powder from the melt pool is selectively sintered using energy from the optical array to form another layer of the structure on the build plate.

### BRIEF DESCRIPTION OF THE DRAWINGS

Fig. 1 is a schematic of an exemplary laser powder bed fusion (PBF-L) additive manufacturing system.
Fig. 2A is a schematic of an exemplary gas turbine engine diffuser positioned in a PBF-L additive manufacturing system during a build campaign.
Fig. 2B is a schematic of the exemplary gas turbine engine diffuser of Fig. 2A positioned in a PBF-L additive manufacturing system of Fig. 2A at an intermediate pause step to permit removal from the PBF-L additive manufacturing system.
Fig. 2C is a schematic of the exemplary gas turbine engine diffuser of Fig. 2B positioned in an abrasive flow machine system.
Fig. 2D is a schematic of the exemplary gas turbine engine diffuser of Fig. 2C repositioned in the PBF-L additive manufacturing system of Fig. 2B.
Fig. 2E is a schematic of the exemplary gas turbine engine diffuser of Fig. 2D repositioned in the PBF-L additive manufacturing system of Fig. 2D with the PBF-L additive manufacturing system build campaign restarted.
Fig. 3A is a schematic of a build plate for the PBF-L additive manufacturing systems of Figs. 2A, 2B, 2D, and 2F and compatible with the abrasive flow machine system of Fig. 2C.
Fig. 3B is a schematic of an alternate embodiment of a build plate for the PBF-L additive manufacturing systems of Figs. 2A, 2B, 2D, and 2F and compatible with the abrasive flow machine system of Fig. 2C.
Fig. 4 is a partial schematic of the exemplary gas turbine engine diffuser of Figs. 2A-2E including a support structure guide.
Fig. 5 is a schematic of the support structure guild of Fig. 4.
Fig. 6 is a flow chart of a method of building the exemplary gas turbine engine diffuser of Figs. 2A-2E.

### DETAILED DESCRIPTION

Additive manufacturing (AM) techniques, including powder bed fusion (PBF) additive manufacturing, can be used to make a wide variety of near net shape parts. Examples of PBF techniques include PBF-laser (PBF-L) and PBF-electron beam (PBF-EM) processes. As known, AM processes can result in parts having an undesirable surface roughness. Such parts often require post processing such as deburring, surface finishing, polishing, and/or radius shaping to finish rough surfaces, particularly rough surfaces on internal passages. While post processing to finish rough surfaces can be readily performed on exterior surfaces or other surfaces that are easily accessible, it can be harder or impossible to accomplish for less accessible features, including interior features. Accomplishing post-process surface finishing for interior features can be particularly challenging for parts made as unitized structures formed as unitary, monolithic pieces using AM techniques.

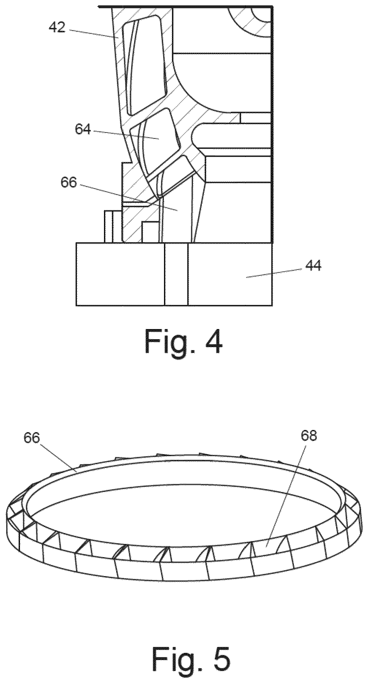

One such exemplary structure is a gas turbine engine diffuser intended to transition a high pressure, high velocity air stream from a compressor into combustor (See Fig. 4). The diffuser is a divergent section of the engine between the compressor and the combustion section. It has the function of reducing high-velocity compressor discharge air to slower velocity, high pressure air before the air enters the combustion section. Among other features, the gas turbine engine diffuser includes a number of internal flow passages to permit air to flow from the compressor to the combustion section. The diffuser's internal flow passages should have a desired surface finish to promote desired flow regimes and to reduce pressure loss.

For some applications, it is desirable to make engine parts, such as gas turbine engine diffusers, as unitized parts (i.e., parts made as a unitary, monolithic structure) using AM techniques to reduce costs and simplify assembly. AM techniques permit such unitized parts to include small, complex internal flow paths. Ideally, such flow paths should have smooth surfaces to limit losses thorough the flow paths. As discussed above, AM techniques generally create relatively rough surfaces that require surface finishing to remove the rough surfaces to produce the desired surface finish. Such rough surfaces can be smoothed using known methods including abrasive flow machining, which is sometimes known as extrude honing.

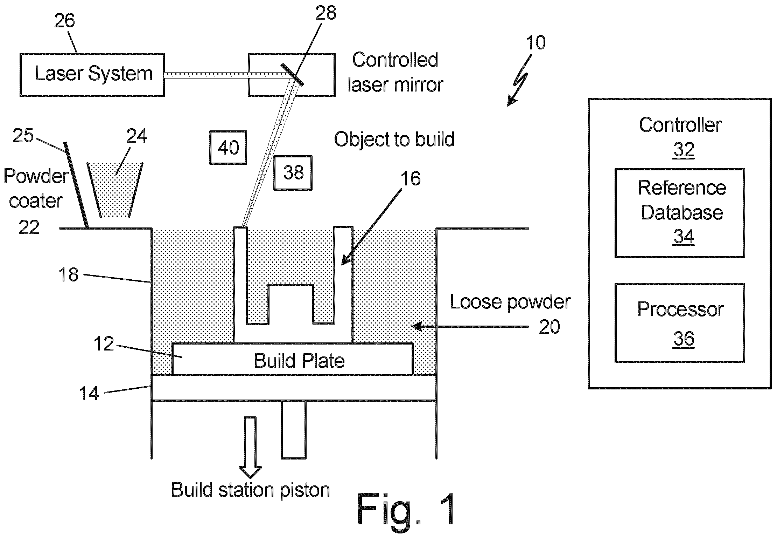

Fig. 1 is a schematic of an exemplary, non-limiting PBF-L AM system 10. For purpose of simplicity, this application will only discuss a PBF-L AM system 10, but a person of ordinary skill will understand that the disclosure applies equally to other AM systems, including PBF-EB systems. The PBF-L system **10** can be used with a variety of build powders to produce a workpiece **16**. For example, the powder can be a metallic powder or polymeric powder. Metallic powders compatible with typical PBF-L systems **10** include aluminum, aluminum alloys (e.g., aluminum-lithium alloys), titanium, nickel, nickel alloys, and other metals and alloys known in the art. Polymeric powders compatible with typical PBF-L systems **10** include a wide variety of polymers as known in the art.

A typical PBF-L system **10** includes a build plate **12**, a build station piston **14** that adjusts the height of the build plate **12**, a workpiece or part **16** that is built on top of the build plate **12,** a powder chamber **18** to contain loose and unconsolidated build powder **20** that surrounds the workpiece **16**. A typical PBF-L system **10** also includes a powder coater **22** that distributes additional build powder **24** over the workpiece **16** after completion of each layer formed on the workpiece **16**. An optical array including a laser system **26** combined with a controlled laser mirror **28** directs a laser beam **30** onto the loose build powder **20** to form a melt pool (not shown) that, when solidified, forms a layer of the workpiece **16**. As each layer of the workpiece **16** is formed, the build station piston **14** lowers the build plate **12** and workpiece **16** by a predetermined distance that corresponds to the desired thickness of the next layer of the workpiece **16**. The powder coater **22** then moves across the top of the loose build powder **20** to distribute a layer of additional build powder **24** that will then be consolidated with the laser beam **30** to form the next layer of the workpiece **16**. A recoater **25** can be directed to move over the surface of the loose build powder **20** to smooth the layer of additional build powder **24**.

Controller **32** controls the height of the build plate **12** by moving the build station piston **14**, which in turn controls the thickness of each layer of the workpiece **16**. Controller **32** also controls the movement of the powder coater **22** as it distributes additional build powder **24**, the movement of the recoater **25** as it smooths the additional build powder **24**, and the movement of the laser beam **30** as it forms the melt pool that consolidates loose build powder **20** to form each layer of the workpiece **16**. For example, the controller **32** controls LPBF system **10** operating parameters, including:
(1) laser beam power, velocity and spot size, build plate temperature, and layer thickness;
(2) temperature-dependent thermophysical properties of the powder;
(3) feedstock properties including average powder particle size; and
(4) laser hatching strategy including hatch distance, hatch delay time, and stripe width.

Controller **32** typically includes a reference database **34** and processor **36**. Reference database **34** contains processing data relevant to the PBF-L system **10**, build powder to be used to produce the workpiece **16**, and the specific work piece **16** to be produced. Processor **36** contains programming to interface with the reference database **34** to control the LPBF system **10** to products parts, such as workpiece **16**, as is known to a person of ordinary skill in the art. Workpiece **16** can be a near-net-shaped part (i.e., initial production of the part that is very close to the final (net) shape).

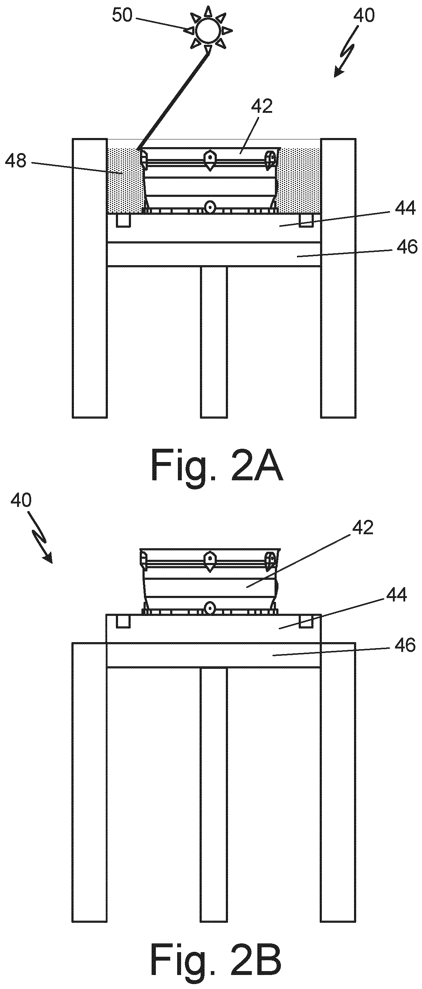

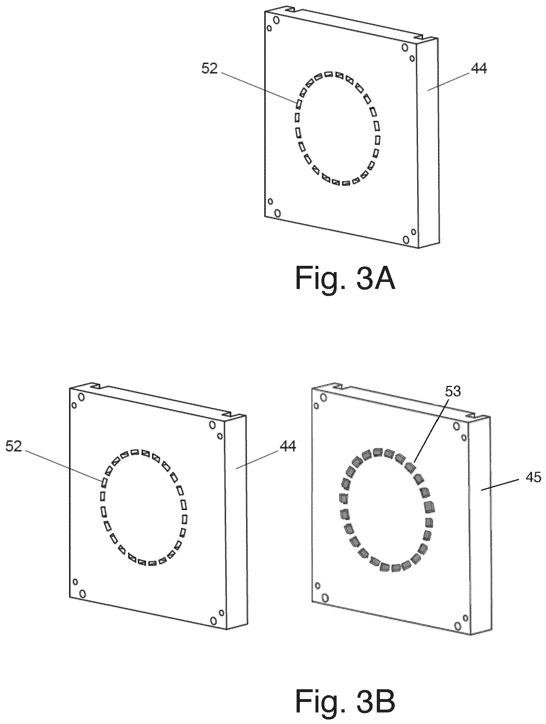

Fig. 2A is a schematic representation of an exemplary gas turbine engine diffuser **42** positioned on a build plate **44** in a PBF-L AM system **40** during a PBF build campaign. The build plate **44** is positioned on a build station piston **46**. A powder bed of unconsolidated build powder **48** surrounds the gas turbine engine diffuser **42** positioned on the build plate **44**. An optical array 50 provides energy to form a melt pool (not shown) in the powder bed **48** to form the gas turbine engine diffuser **42**. As shown in Fig. 3, the build plate **44** includes a plurality of abrasive media flow channels **52** that extend entirely through the thickness of the build plate **44**. In some examples, the plurality of abrasive media flow channels **52** can be configured to be sealed during the PBF build campaign to prevent build powder **48** from entering the plurality of abrasive media flow channels **52**. For example, the abrasive media flow channels **52** can be sealed with a wax, polymeric material, metal, or other material that is compatible with PBF operating conditions and will not interact with the build powder used in the PBF process and can be readily removed to open the abrasive media flow channels **52**. The plurality of abrasive media flow channels **52** are configured and sized to be open during an abrasive flow machining (AFM) operation (discussed further below) to permit a flow of abrasive media from a source of abrasive media through the abrasive media flow channels **52** in the build plate **44** into the structure, in this case the gas turbine engine diffuser **42**, built on the build plate **44**.

As shown in Fig. 2B, the PBF-L AM system **40** is configured to permit the PBF build campaign to pause at a predetermined point to permit the build plate **44** and the structure built on the build plate **44** (e.g., the gas turbine engine diffuser **42**) to be removed from the PBF-L AM system **40** for an in-process surface finishing step. The predetermined point should correspond to completion of desired elements of the structure built on the build plate **44** (e.g., the gas turbine engine diffuser **42**). For example, the elements could include internal flow passages **64** (see Fig. 4) or other elements of the structure built on the build plate **44**, that could benefit from an in-process surface finishing step. After the PBF build campaign is paused, unconsolidated build powder **48** is evacuated from the PBF-L AM system **40** and the build piston **46** elevates the build plate **44** and the structure built on the build plate **44** (e.g., the gas turbine engine diffuser **42**) so they can be removed from the PBF-L AM system **40**. After removal from the PBF-L AM system **40**, the abrasive flow media channels **52** (see Fig. 3) on the build plate **44** are opened.

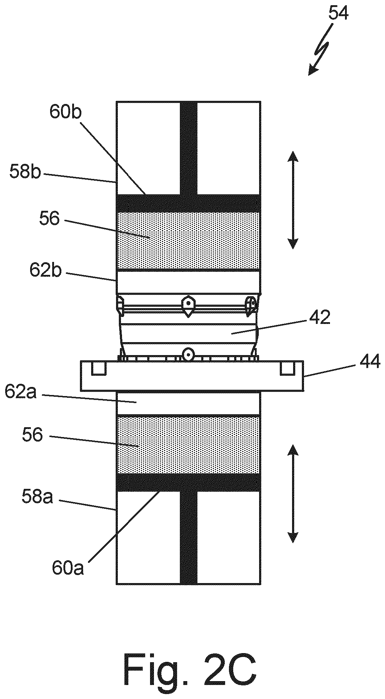

The build plate **44** and the structure built on the build plate **44** (e.g., the gas turbine engine diffuser **42**) can be placed into an abrasive flow system **54** as shown in Fig. 2C. The abrasive flow system **54** can be any such device known in the art that is capable of flowing abrasive media **56** through the now opened abrasive flow media channels **52** (see Fig. 3) on the build plate **44**. Suitable abrasive flow systems **54** can be obtained from a variety of suppliers, including Extrude Hone (Irwin, Pennsylvania) and other suppliers. The abrasive media **56** can be any such media useful in abrasive flow machines **54** and compatible with the build plate **44** and the structure built on the build plate **44** (e.g., the gas turbine engine diffuser **42**). For example, the abrasive media **56** is typically a viscous material, having the consistency of putty or dough, that includes abrasive particles such as silicon carbide (SiC) or other abrasive particles.

As shown in Fig. 2C, the abrasive flow system **54** can include one or more abrasive media reservoirs **58a**, **58b** that hold the abrasive media **56**. Abrasive media pistons **60a**, **60b** provide the motive force to flow the abrasive media **56** through the abrasive flow system **54**. At a minimum, the abrasive flow system **54** includes a first abrasive media reservoir **58a** and a first abrasive media piston **60a** to flow the abrasive media **56** through the abrasive flow system **54**. In such a configuration, the abrasive media **56** can exit a workpiece (e.g., the gas turbine engine diffuser **42**) installed on the abrasive flow system **54** after a single pass of the abrasive media **56**. Fig. 2C shows an abrasive flow system **54** configuration that includes a first abrasive media reservoir **58a**, a first abrasive media piston **60a**, a second abrasive media reservoir **58b**, and a second abrasive media piston **60b** to permit bi-directional flow of the abrasive media **56**. In such a configuration, the first abrasive media piston **60a** pushes the abrasive media **56** from the first abrasive media reservoir **58a** through the workpiece (e.g., the gas turbine engine diffuser **42**) installed on the abrasive flow system **54** into the second abrasive media reservoir **58b**, displacing the second abrasive media piston **60b**. After the first pass of the abrasive media **56** is finished, the second abrasive media piston **60b** pushes the abrasive media **56** from the second abrasive media reservoir **58b** through the workpiece (e.g., the gas turbine engine diffuser **42**) installed on the abrasive flow system **54** into the first abrasive media reservoir **58a**, displacing the first abrasive media piston **60a**. The flow of abrasive media **56** can alternate between the first abrasive media reservoir **58a** and the second abrasive media reservoir **58b** until a desired surface finish is achieved in the workpiece (e.g., the gas turbine engine diffuser **42**). The abrasive flow system **54** can further include first and second fixtures **62a**, **62b**, each of which can include a clamping system (not expressly shown), for holding the workpiece in place in the abrasive flow system **54**.

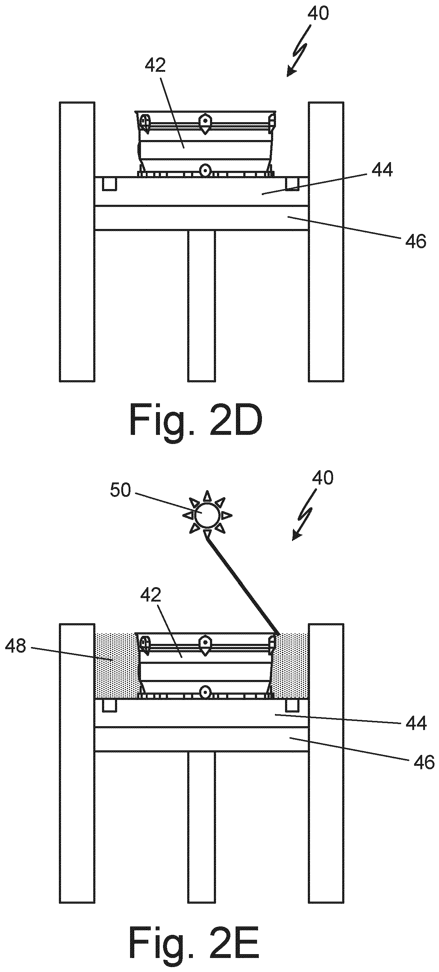

After the abrasive flow machining process is completed, the build plate **44** and the structure built on the build plate **44** are removed from the abrasive flow system **54**. The abrasive media flow channels **52** in the build plate **44** are, optionally, sealed and the build plate **44** and the structure built on the build plate are repositioned in the PBF-L AM system **40**. As shown in Fig. 2D, the build plate **44** and the structure built on the build plate are lowered to a predetermined height **64** that corresponds to the height at which the PBF campaign was paused.

As Fig. 2E shows, the PBF campaign is restarted by delivering, with the powder delivery mechanism, build powder to the build area over the build plate **44** and surrounding the structure built on the build plate to re-form the build powder bed **48**. The recoater distributes the build powder in the build powder bed **48** to provide even distribution of the build powder in the build powder bed **48**. The optical array **50** positioned over the build area on the build plate **44** directs energy to the build powder in the build powder bed **48** to re-form the melt pool (not shown) in the build powder bed **48**. Energy from the optical array **50** selectively sinterings build powder from the melt pool to form another layer of the structure on the build plate **44**.

Fig. 3A shows the build plate **44** with abrasive media flow channels **52**. As discussed above, the abrasive media flow channels **52** are, optionally, sealed during the PBF build campaign to prevent build powder **48** from entering the plurality of abrasive media flow channels **52**. The plurality of abrasive media flow channels **52** are configured and sized to be open during an abrasive flow machining (AFM) operation (discussed further below) to permit a flow of abrasive media from a source of abrasive media through the abrasive media flow channels **52** in the build plate **44** into the structure, in this case the gas turbine engine diffuser **42**, built on the build plate **44**.

Fig. 3B shows an alternate embodiment for build plate **44** with abrasive media flow channels **52**. In this embodiment, the build plate **44** is paired with a backing plate **45** that includes a plurality of sealing protrusions ("teeth") **53** configured and sized to fit into and seal the abrasive media flow channels **52** when the build plate **44** is positioned adjacent to the backing plate **45**. In this embodiment, the back plate **45** is configured to be positioned on the build piston **46** (see Figs. 2A, 2B, 2D, and 2E) and to remain on the build piston **46** when the build plate **44** and the structure built on the build plate are removed for installation in the abrasive flow system **54**. This way the build plate **44** with the abrasive media flow channels **52** can be lifted off of the backing plate **45**, allowing the abrasive media flow channels **52** to be opened and placed inside abrasive flow system **54**. After the abrasive flow machining process is completed, the build plate **44** can be moved back onto the PBF-LAM system **40** and set back onto the sealing protrusions **53** for the build to continue as described above.

Fig. 4 shows the gas turbine engine diffuser **42** positioned on the build plate **44**. The gas turbine engine diffuser includes a plurality of internal flow passages **64** that are configured to reduce high-velocity compressor discharge air to slower velocity, high pressure air before the air enters the combustion section. The plurality of internal flow passages **64** should have a desired surface finish to promote desired flow regimes and to reduce pressure loss. For some applications, it is desirable to make gas turbine engine diffusers **42** as unitized parts (i.e., parts made as a unitary, monolithic structure) using AM techniques to reduce costs and simplify assembly. AM techniques permit the gas turbine engine diffuser **42** to be formed with small, complex internal flow passages **64**. As discussed above, AM techniques generally create relatively rough surfaces that require surface finishing, such as with abrasive flow machining, to remove the rough surfaces to produce the desired surface finish.

As shown in Fig. 4, the gas turbine engine diffuser **42** can include a support structure **66** that provides physical support for the gas turbine engine diffuser **42** as it is built on the build plate **44**. The support structure **66** can include internal channels **68** (see Fig. 5) that are configured to guide abrasive media through the abrasive media flow channels **52** in the build plate **44** into the plurality of internal flow passages **64** in the gas turbine engine diffuser **42**. The support structure **66** can be built integral with the gas turbine engine diffuser **42** during the PBF build campaign such that the support structure **66** is configured to be removed from the gas turbine engine diffuser **42** after the PBF build campaign is completed.

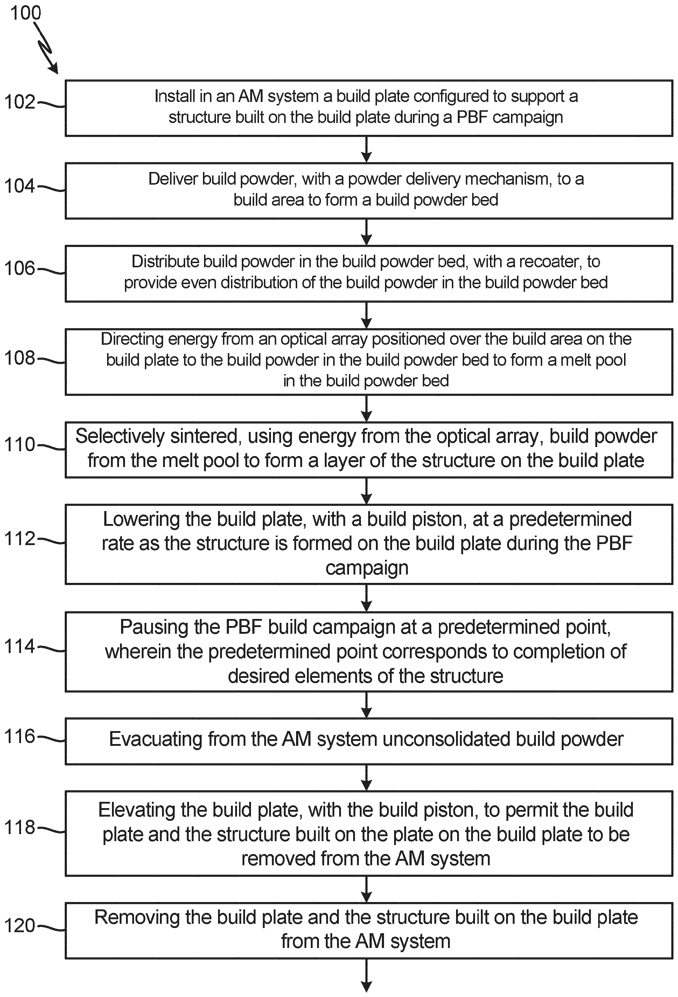

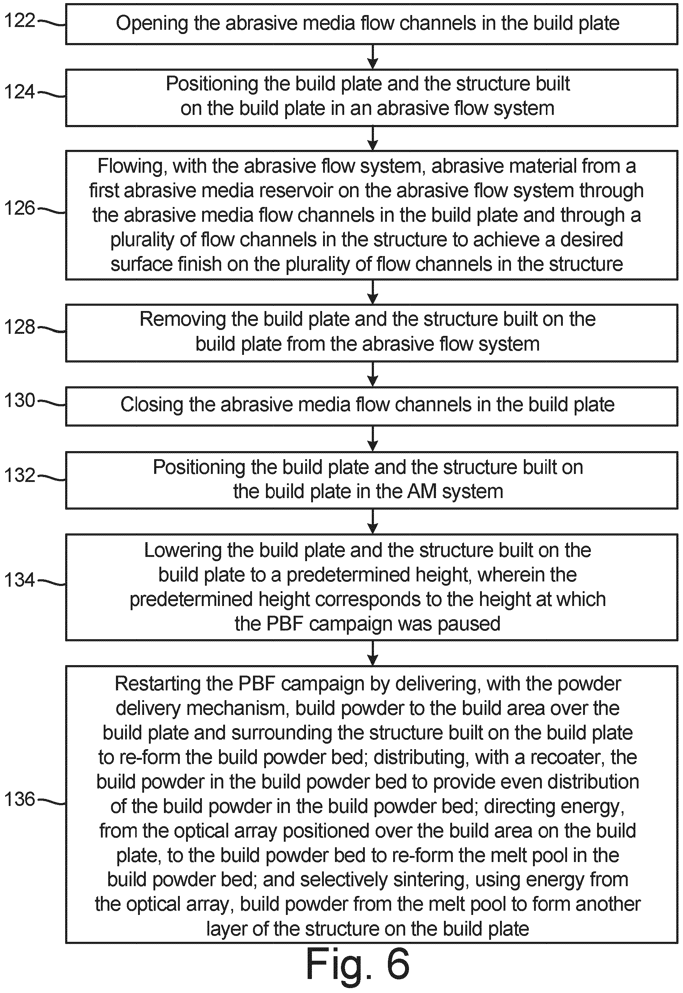

Fig. 6 is a flowchart of a method **100** for making a structure with a PBF AM system. The method **100** starts with step **102** that includes installing in the AM system a build plate configured to support a structure built on the build plate during a PBF build campaign. The build plate includes a plurality abrasive media flow channels extending entirely through a thickness of the build plate. The plurality of abrasive media flow channels are, optionally, configured to be sealed during the PBF build campaign to prevent build powder from entering the plurality of abrasive media flow channels and are configured and sized to be open during an abrasive flow machining (AFM) operation to permit a flow of abrasive media from a source of abrasive media to the structure positioned on the build plate.

At step **104** build powder is delivered, with a powder delivery mechanism, to a build area to form a build powder bed. The build powder in the build powder bed is distributed at step **106** with a recoater to provide even distribution of the build powder in the build powder bed. At step **108**, an optical array positioned over the build area on the build plate directs energy to the build powder in the build powder bed to form a melt pool in the build powder bed. At step **110**, the build powder from the melt pool is selectively sintered, using energy from the optical array to form a layer of the structure on the build plate. At step **112**, a build piston lowers the build plate at a predetermined rate as the structure is formed on the build plate during the PBF campaign.

At step **114**, the PBF build campaign is paused at a predetermined point that corresponds to completion of desired elements of the structure. Unconsolidated build powder is evacuated from the AM system at step **116** and, at step **118**, the build plate is elevated with the build piston to permit the build plate and the structure built on the build plate to be removed from the AM system. At step **120**, the build plate and the structure built on the build plate is removed from the AM system and, at step **122**, the abrasive media flow channels in the build plate are opened.

At step **124**, the build plate and the structure built on the build plate are positioned in an abrasive flow system. Abrasive material is flow with the abrasive flow system at step **126** from a first abrasive media reservoir on the abrasive flow system through the abrasive media flow channels in the build plate and through a plurality of flow channels in the structure to achieve a desired surface finish on the plurality of flow channels in the structure. At step **128**, the build plate and the structure built on the build plate are removed from the abrasive flow system and at step **130** the abrasive media flow channels in the build plate are closed.

At step **132**, the build plate and the structure built on the build plate is positioned in the AM system. The build plate and the structure built on the build plate are lowered at step **134** to a predetermined height that corresponds to the height at which the PBF campaign was paused.

At step **136**, the PBF campaign is restarted by delivering, with the powder delivery mechanism, build powder to the build area over the build plate and surrounding the structure built on the build plate to re-form the build powder bed. The recoater distributes the build powder in the build powder bed to provide even distribution of the build powder in the build powder bed. The optical array positioned over the build area on the build plate directs energy, to the build powder in the build powder bed to re-form the melt pool in the build powder bed. Build powder from the melt pool is selectively sintered, using energy from the optical array, to form another layer of the structure on the build plate.

Reducing surface roughness on the plurality gas turbine engine diffuser internal flow passages achieves better performance for the unitized configuration in which the gas turbine engine diffuser is built. Introducing a surface-finishing operation into the PBF build campaign permits the desired surface finish for the plurality of internal flow passages to be achieved without resigning the gas turbine engine diffuser. The in-process surface-finishing operation also allows the gas turbine engine diffuser to remain on the build plate during the surface-finishing operation to ensure alignment and location when the PBF build campaign is be resumed to complete the gas turbine engine diffuser build.

### Discussion of Possible Embodiments

The following are non-exclusive descriptions of possible embodiments of the present invention.

A build plate for a powder bed fusion (PBF) additive manufacturing (AM) system comprises a build plate configured to support a structure built on the build plate during a PBF build campaign and a plurality abrasive media flow channels extending entirely through a thickness of the build plate. The plurality of abrasive media flow channels are configured and sized to be open during an abrasive flow machining (AFM) operation to permit a flow of abrasive media from a source of abrasive media through the abrasive media flow channels in the build plate into the structure built on the build plate.

The build plate of the preceding paragraph can optionally include any one or more of the following features, configurations and/or additional elements:
The build plate of the preceding paragraph, wherein the plurality of abrasive media flow channels are configured to be sealed during the PBF build campaign to prevent build powder from entering the plurality of abrasive media flow channels.

The build plate of the preceding paragraph, wherein the plurality of abrasive media flow channels are configured to be sealed during the PBF build campaign with a plurality of sealing protrusions on a backing plate, wherein the sealing protrusions are configured and sized to fit into and seal the abrasive media flow channels when the build plate is positioned adjacent to the backing plate.

The build plate of any of the preceding paragraphs, wherein the structure includes a support structure configured to guide the abrasive media from the plurality of abrasive media flow channels into a plurality of flow channels in the structure during the AFM operation.

The build plate of any of the preceding paragraphs, wherein the build plate and structure built on the build plate are configured to be removed from the AM system during a pause in the PBF build campaign.

The build plate of the preceding paragraph, wherein the build plate and structure built on the build plate are configured to be positioned in an abrasive flow machine, wherein the abrasive flow machine is configured to flow abrasive material, during the AFM operation, through the plurality of abrasive media flow channels in the build plate into a plurality of flow channels in the structure.

The build plate of the preceding paragraph, wherein the build plate and structure built on the build plate are configured to be removed from the abrasive flow machine following the abrasive flow machining operation and repositioned in the AM system to facilitate restart of the PBF build campaign.

The build plate of any of the preceding paragraphs, wherein the structure is a gas turbine engine diffuser.

An abrasive flow machining (AFM) system comprises a first abrasive media reservoir, means for connecting the first abrasive media reservoir to an additive manufacturing (AM) system build plate and means for directing abrasive media from the first abrasive media reservoir through the plurality of abrasive media flow channels in the AM system build plate into a plurality of flow channels in the structure. The AM system build plate includes a structure built on the AM system build plate during an AM system build campaign and a plurality of abrasive media flow channels extending entirely through a thickness of the AM system build plate.

The AFM system of the preceding paragraph can optionally include any one or more of the following features, configurations and/or additional elements:

The AFM system of the preceding paragraph, further comprising a second abrasive media reservoir, means for connecting the second abrasive media reservoir to the plurality of flow channels in the structure built on the AM system build plate, wherein the second abrasive media reservoir is configured to collect abrasive media exiting the plurality of flow channels in the structure when the AFM system is in operation, and means for reversing flow of the abrasive media by directing abrasive media from the second abrasive media reservoir through the plurality of flow channels in the structure and the plurality of abrasive media flow channels in the AM system build plate into the first abrasive media reservoir.

The AFM system of any of the preceding paragraphs, wherein the structure includes a support structure configured to guide the abrasive media from the plurality of abrasive media flow channels into the plurality of flow channels in the structure when the AFM system is in operation.

The AFM system of any of the preceding paragraphs, wherein the build plate and structure built on the build plate are configured to be removed from the AFM system following the abrasive flow machining operation and repositioned into the AM system to facilitate restart of a powder bed fusion (PBF) AM build campaign.

The AFM system of any of the preceding paragraphs, wherein the structure is a gas turbine engine diffuser.

A method of making a structure with a powder bed fusion (PBF) additive manufacturing (AM) system comprises installing in the AM system a build plate configured to support a structure built on the build plate during a PBF build campaign, wherein the build plate includes a plurality abrasive media flow channels extending entirely through a thickness of the build plate; wherein the plurality of abrasive media flow channels are configured and sized to be open during an abrasive flow machining (AFM) operation to permit a flow of abrasive media from a source of abrasive media to the structure positioned on the build plate; delivering, with a powder delivery mechanism, build powder to a build area to form a build powder bed; distributing, with a recoater, the build powder in the build powder bed to provide even distribution of the build powder in the build powder bed; directing energy, from an optical array positioned over the build area on the build plate, to the build powder in the build powder bed to form a melt pool in the build powder bed; selectively sintering, using energy from the optical array, build powder from the melt pool to form a layer of the structure on the build plate; and lowering the build plate, with a build piston, at a predetermined rate as the structure is formed on the build plate during the PBF campaign; pausing the PBF build campaign at a predetermined point, wherein the predetermined point corresponds to completion of desired elements of the structure; evacuating from the AM system unconsolidated build powder; elevating the build plate, with the build piston, to permit the build plate and the structure built on the build plate to be removed from the AM system; removing the build plate and the structure built on the build plate from the AM system; positioning the build plate and the structure built on the build plate in an abrasive flow system; flowing, with the abrasive flow system, abrasive material from a first abrasive media reservoir on the abrasive flow system through the abrasive media flow channels in the build plate and through a plurality of flow channels in the structure to achieve a desired surface finish on the plurality of flow channels in the structure; removing the build plate and the structure built on the build plate from the abrasive flow system; positioning the build plate and the structure built on the build plate in the AM system; lowering the build plate and the structure built on the build plate to a predetermined height, wherein the predetermined height corresponds to the height at which the PBF campaign was paused; and restarting the PBF campaign by: delivering, with the powder delivery mechanism, build powder to the build area over the build plate and surrounding the structure built on the build plate to re-form the build powder bed; distributing, with a recoater, the build powder in the build powder bed to provide even distribution of the build powder in the build powder bed; directing energy, from the optical array positioned over the build area on the build plate, to the build powder in the build powder bed to re-form the melt pool in the build powder bed; and selectively sintering, using energy from the optical array, build powder from the melt pool to form another layer of the structure on the build plate.

The method of the preceding paragraph can optionally include any one or more of the following features, configurations and/or additional elements:
The method of the preceding paragraph, further comprising collecting, in a second abrasive media reservoir on the abrasive flow system, abrasive media exiting the plurality of flow channels in the structure; and reversing flow of the abrasive media by directing abrasive media from the second abrasive media reservoir through the plurality of flow channels in the structure and the plurality of abrasive media flow channels in the build plate into the first abrasive media reservoir; repeating flow of the abrasive media from the first abrasive media reservoir through the abrasive media flow channels in the build plate and the plurality of flow channels in the structure into the second abrasive media reservoir and flow of the abrasive media from the second abrasive media reservoir through the plurality of flow channels in the structure and the plurality of abrasive media flow channels in the build plate into the first abrasive media reservoir until a desired surface finish on the plurality of flow channels in the structure is achieved.

The method of any of the preceding paragraphs, wherein the plurality of abrasive media flow channels are configured be sealed during the PBF build campaign to prevent build powder from entering the plurality of abrasive media flow channels, further comprising: opening the abrasive media flow channels in the build plate after removing the build plate and the structure built on the build plate from the AM system; and closing the abrasive media flow channels in the build plate after removing the build plate and the structure built on the build plate from the abrasive flow system.

The method of the preceding paragraph, wherein the plurality of abrasive media flow channels are configured be sealed during the PBF build campaign to prevent build powder from entering the plurality of abrasive media flow channels, further comprising: opening the abrasive media flow channels in the build plate by removing the build plate and the structure built on the build plate from a backing plate on the AM system, wherein the backing plate includes a plurality of sealing protrusions that are configured and sized to fit into and seal the abrasive media flow channels when the build plate is positioned adjacent to the backing plate; and closing the abrasive media flow channels in the build plate after removing the build plate and the structure built on the build plate from the abrasive flow system by placing the build plate and the structure built on the build plate onto the backing plate on the AM system to cause the sealing protrusions on the backing plate to seal the abrasive media flow channels.

The method of any of the preceding paragraphs, wherein the structure includes a support structure configured to guide the abrasive media from the plurality of abrasive media flow channels into a plurality of flow channels in the structure during the AFM operation.

The method of any of the preceding paragraphs, wherein the structure is a gas turbine engine diffuser.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A build plate (44) for a powder bed fusion (PBF) additive manufacturing (AM) system, comprising:
a build plate (44) configured to support a structure (42) built on the build plate (44) during a PBF build campaign; and
a plurality abrasive media flow channels (52) extending entirely through a thickness of the build plate (44);
wherein the plurality of abrasive media flow channels (52) are configured and sized to be open during an abrasive flow machining (AFM) operation to permit a flow of abrasive media (56) from a source of abrasive media through the abrasive media flow channels (52) in the build plate (44) into the structure (42) built on the build plate (44).

2. The build plate (44) of claim 1, wherein the plurality of abrasive media flow channels (52) are configured to be sealed during the PBF build campaign to prevent build powder (48) from entering the plurality of abrasive media flow channels (52).

3. The built plate of claim 2, wherein the plurality of abrasive media flow channels (52) are configured to be sealed during the PBF build campaign with a plurality of sealing protrusions (53) on a backing plate (45), wherein the sealing protrusions (53) are configured and sized to fit into and seal the abrasive media flow channels (52) when the build plate (44) is positioned adjacent to the backing plate (45).

4. The build plate (44) of any preceding claim, wherein the build plate (44) and structure (42) built on the build plate (44) are configured to be removed from the AM system during a pause in the PBF build campaign.

5. The build plate (44) of claim 4, wherein the build plate (44) and structure (42) built on the build plate (44) are configured to be positioned in an abrasive flow machine (54), wherein the abrasive flow machine (54) is configured to flow abrasive material, during the AFM operation, through the plurality of abrasive media flow channels (52) in the build plate (44) into a plurality of flow channels in the structure (42).

6. The build plate (44) of claim 5, wherein the build plate (44) and structure (42) built on the build plate (44) are configured to be removed from the abrasive flow machine (54) following the abrasive flow machining operation and repositioned in the AM system to facilitate restart of the PBF build campaign.

7. An abrasive flow machining (AFM) system comprising:
a first abrasive media reservoir (58a);
means for connecting the first abrasive media reservoir (58a) to an additive manufacturing (AM) system build plate (44), wherein the AM system build plate (44) includes a structure (42) built on the AM system build plate (44) during an AM system build campaign and a plurality of abrasive media flow channels (52) extending entirely through a thickness of the AM system build plate (44); and
means for directing abrasive media (56) from the first abrasive media reservoir (58a) through the plurality of abrasive media flow channels (52) in the AM system build plate (44) into a plurality of flow channels in the structure (42).

8. The AFM system of claim 7, further comprising:
a second abrasive media reservoir (58b);
means for connecting the second abrasive media reservoir (58b) to the plurality of flow channels in the structure (42) built on the AM system build plate (44), wherein the second abrasive media reservoir (58b) is configured to collect abrasive media (56) exiting the plurality of flow channels in the structure (42) when the AFM system is in operation; and
means for reversing flow of the abrasive media (56) by directing abrasive media (56) from the second abrasive media reservoir (58b) through the plurality of flow channels in the structure (42) and the plurality of abrasive media flow channels (52) in the AM system build plate (44) into the first abrasive media reservoir (58a).

9. The AFM system of claim 7 or 8, wherein:
the structure (42) includes a support structure (66) configured to guide the abrasive media (56) from the plurality of abrasive media flow channels (52) into the plurality of flow channels in the structure (42) when the AFM system is in operation; and/or
the build plate (44) and structure (42) built on the build plate (44) are configured to be removed from the AFM system following the abrasive flow machining operation and repositioned into the AM system to facilitate restart of a powder bed (48) fusion (PBF) AM build campaign.

10. A method of making a structure (42) with a powder bed fusion (PBF) additive manufacturing (AM) system, comprising:
installing in the AM system a build plate (44) configured to support a structure (42) built on the build plate (44) during a PBF build campaign, wherein the build plate (44) includes a plurality abrasive media flow channels (52) extending entirely through a thickness of the build plate (44); wherein the plurality of abrasive media flow channels (52) are configured and sized to be open during an abrasive flow machining (AFM) operation to permit a flow of abrasive media (56) from a source of abrasive media to the structure (42) positioned on the build plate (44);
delivering, with a powder delivery mechanism, build powder to a build area to form a build powder bed (48);
distributing, with a recoater (25), the build powder in the build powder bed (48) to provide even distribution of the build powder in the build powder bed (48);
directing energy, from an optical array (50) positioned over the build area on the build plate (44), to the build powder in the build powder bed (48) to form a melt pool in the build powder bed (48);
selectively sintering, using energy from the optical array (50), build powder from the melt pool to form a layer of the structure (42) on the build plate (44); and
lowering the build plate (44), with a build piston (46), at a predetermined rate as the structure is formed on the build plate (44) during the PBF campaign;
pausing the PBF build campaign at a predetermined point, wherein the predetermined point corresponds to completion of desired elements of the structure (42);
evacuating from the AM system unconsolidated build powder;
elevating the build plate (44), with the build piston (46), to permit the build plate (44) and the structure (42) built on the build plate (44) to be removed from the AM system;
removing the build plate (44) and the structure (42) built on the build plate (44) from the AM system;
positioning the build plate (44) and the structure (42) built on the build plate (44) in an abrasive flow system (54);
flowing, with the abrasive flow system (54), abrasive material from a first abrasive media reservoir (58a) on the abrasive flow system (54) through the abrasive media flow channels (52) in the build plate (44) and through a plurality of flow channels in the structure (42) to achieve a desired surface finish on the plurality of flow channels in the structure (42);
removing the build plate (44) and the structure (42) built on the build plate (44) from the abrasive flow system (54);
positioning the build plate (44) and the structure (42) built on the build plate (44) in the AM system;
lowering the build plate (44) and the structure (42) built on the build plate (44) to a predetermined height, wherein the predetermined height corresponds to the height at which the PBF campaign was paused; and
restarting the PBF campaign by:
delivering, with the powder delivery mechanism, build powder to the build area over the build plate (44) and surrounding the structure (42) built on the build plate (44) to re-form the build powder bed (48);
distributing, with a recoater (25), the build powder in the build powder bed (48) to provide even distribution of the build powder in the build powder bed (48);
directing energy, from the optical array (50) positioned over the build area on the build plate (44), to the build powder in the build powder bed (48) to re-form the melt pool in the build powder bed (48); and
selectively sintering, using energy from the optical array (50), build powder from the melt pool to form another layer of the structure (42) on the build plate (44).

11. The method of claim 10, further comprising:
collecting, in a second abrasive media reservoir (58b) on the abrasive flow system (54), abrasive media (56) exiting the plurality of flow channels in the structure (42); and
reversing flow of the abrasive media (56) by directing abrasive media (56) from the second abrasive media reservoir (58b) through the plurality of flow channels in the structure (42) and the plurality of abrasive media flow channels (52) in the build plate (44) into the first abrasive media reservoir (58a);
repeating flow of the abrasive media (56) from the first abrasive media reservoir (58a) through the abrasive media flow channels (52) in the build plate (44) and the plurality of flow channels in the structure (42) into the second abrasive media reservoir (58b) and flow of the abrasive media (56) from the second abrasive media reservoir (58b) through the plurality of flow channels in the structure (42) and the plurality of abrasive media flow channels (52) in the build plate (44) into the first abrasive media reservoir (58a) until a desired surface finish on the plurality of flow channels in the structure (42) is achieved.

12. The method of claim 10 or 11, wherein the plurality of abrasive media flow channels (52) are configured be sealed during the PBF build campaign to prevent build powder (48) from entering the plurality of abrasive media flow channels (52), further comprising:
opening the abrasive media flow channels (52) in the build plate (44) after removing the build plate (44) and the structure (42) built on the build plate (44) from the AM system; and
closing the abrasive media flow channels (52) in the build plate (44) after removing the build plate (44) and the structure (42) built on the build plate (44) from the abrasive flow system (54).

13. The method of claim 12, wherein the plurality of abrasive media flow channels (52) are configured be sealed during the PBF build campaign to prevent build powder (48) from entering the plurality of abrasive media flow channels (52), further comprising:
opening the abrasive media flow channels (52) in the build plate (44) by removing the build plate (44) and the structure (42) built on the build plate (44) from a backing plate (45) on the AM system, wherein the backing plate (45) includes a plurality of sealing protrusions (53) that are configured and sized to fit into and seal the abrasive media flow channels (52) when the build plate (44) is positioned adjacent to the backing plate (45); and
closing the abrasive media flow channels (52) in the build plate (44) after removing the build plate (44) and the structure (42) built on the build plate (44) from the abrasive flow system (54) by placing the build plate (44) and the structure (42) built on the build plate (44) onto the backing plate (45) on the AM system to cause the sealing protrusions (53) on the backing plate (45) to seal the abrasive media flow channels (52).

14. The build plate (44) of any of claims 1 to 6 or the method of any of claims 10 to 13, wherein the structure (42) includes a support structure (66) configured to guide the abrasive media (56) from the plurality of abrasive media flow channels (52) into a plurality of flow channels in the structure (42) during the AFM operation.

15. The build plate (44), AFM system or method of any preceding claim, wherein the structure (42) is a gas turbine engine diffuser (42).
